# FASCICULE DE BREVET EUROPEEN

(11) **EP 2 199 647 B1**
(45) Date de publication et mention de la délivrance du brevet: **26.10.2011**
(21) Numéro de dépôt: 09179325.7
(22) Date de dépôt: 15.12.2009
(51) Int. Cl.: F16H 63/30

(54) **Boîte de vitesses manuelle avec passage en translation et sélection en rotation comportant un frein de marche arrière utilisant un synchroniseur de marche avant**
Handschaltgetriebe mit einer Synchronisiereinrichtung für den Rückwärtsgang
Manual gearbox with a synchromesh mechanism during a reverse shift select operation

(30) Priorité: 19.12.2008 FR 0858818
(43) Date de publication de la demande: 23.06.2010
(73) Titulaire: Peugeot Citroën Automobiles SA, 78140 Vélizy-Villacoublay (FR)
(72) Inventeur: Aleksander, Boris, 91400, Orsay (FR); Matias Carlos, Carlos, 95100, Argenteuil (FR)

(56) Documents cités:
- EP-A- 0 300 843
- EP-A- 0 745 790
- EP-A- 1 508 728
- EP-A- 2 053 282
- FR-A- 2 686 385
- FR-A- 2 724 002
- FR-A- 2 838 176
- US-A- 4 601 214

## Description

La présente invention se rapporte au domaine des boîtes de vitesses manuelles du type passage en translation et sélection en rotation pour un véhicule automobile. Une telle boîte est connue de l'état de la technique et est divulguée par le document FR-A-2 686 385.

Plus particulièrement, la présente invention a pour objet une telle boîte de vitesses comportant un dispositif de freinage de marche arrière permettant un passage facilité de la marche arrière dans une telle boîte.

Les commandes internes de boîte de vitesses utilisent plusieurs éléments pour permettre l'actionnement de synchroniseurs, en interne de la boîte de vitesses et par des leviers, en externe de boîte de vitesses.

Ces éléments peuvent êtres distingués en deux dispositifs, d'une part, un dispositif de fourchettes venant en contact avec chaque synchroniseur, et, d'autre part, un dispositif de doigt et leviers permettant l'actionnement et le verrouillage de ces fourchettes, appelé aussi dispositif de commande interne.

En général, un dispositif de commande interne, comprend un moyen de blocage interne, fréquemment une clé d'interverrouillage et un doigt de passage de vitesses ainsi que son organe de passage. Ce dispositif de commande interne a pour but d'exercer deux fonctions principales, d'une part la sélection et le déplacement d'une unique fourchette à la fois et, d'autre part, le verrouillage en translation des fourchettes non sélectionnées.

Pour cela, le dispositif de commande interne utilise donc un moyen de blocage appelé clé d'interverrouillage qui bloque en translation les fourchettes non sélectionnées.

Une boîte de vitesses avec passage en translation et sélection en rotation est une boîte dans laquelle le passage de vitesse se fait par translation du doigt de passage et la sélection de vitesse par une rotation du doigt de passage.

La commande interne d'une telle boîte présente une clé d'interverrouillage se déplaçant en rotation avec le doigt de passage de vitesses, mais n'étant pas entrainé en translation avec ce même doigt.

Un problème particulier se pose pour tous les types de boîte de vitesses lors du passage de la marche arrière.

Une boîte de vitesses est constituée généralement d'un arbre primaire, lié à l'arbre moteur par l'intermédiaire de l'embrayage et portant les pignons primaires et d'un arbre secondaire portant des pignons fous, engrenant respectivement avec un pignon de l'arbre primaire, ainsi que d'un arbre pour la marche arrière, portant un pignon pouvant coulisser et s'intercaler entre un pignon de l'arbre primaire et un autre de l'arbre secondaire.

Pour chaque rapport de vitesse de marche avant, après débrayage, afin de rendre un pignon fou solidaire de son arbre, il faut dans un premier temps le synchroniser avec celui-ci, c'est-à-dire annuler sa vitesse de rotation relative, puis le bloquer en rotation. Cette manoeuvre est assurée par un synchroniseur de marche avant, en liaison glissière avec l'arbre et commandé par la fourchette de passage de vitesse correspondante.

Un passage de marche arrière n'est quant à lui possible que lorsque les pignons sont immobiles dans une position désaccouplée. Ceci se produit naturellement lors d'un temps mort suffisamment long sous l'effet de la perte d'énergie dans la boîte de vitesses.

Cependant, lors d'un passage rapide de marche arrière après le débrayage, il n'est pas possible d'enclencher la marche arrière sans provoquer de craquement.

En effet, si le véhicule est arrêté, l'arbre secondaire de la boîte de vitesses est arrêté, comme les roues du véhicule ne tournent pas et en conséquence le pont et cet arbre secondaire aussi. Cependant, l'arbre primaire tourne à la vitesse du moteur lorsque l'embrayage est fermé, généralement au ralenti pour une situation de passage en marche arrière. Lorsque l'embrayage est ouvert, cet arbre primaire voit sa vitesse décroître lentement jusqu'à une vitesse nulle.

Cette décélération lente de l'arbre primaire dure généralement trop longtemps et sans moyen de compensation prévu sur le rapport de marche arrière, le conducteur a tendance à passer ce rapport sans forcément attendre que la vitesse de l'arbre primaire soit nulle. Cette tendance est renforcée du fait que le conducteur ne peut pas savoir si, au moment de passer la marche arrière, cette vitesse est nulle ou non.

Afin de permettre de passer la marche arrière sans désagrément pour le conducteur, deux solutions ont été proposées dans l'état de la technique.

Il a été proposé d'utiliser un synchroniseur de pignon de marche arrière.

Il a aussi été proposé d'utiliser un frein de marche arrière.

Un synchroniseur de marche arrière a le désavantage d'être coûteux et de présenter un grand encombrement alors qu'il offre un agrément assez proche de celui d'un frein de marche arrière et c'est cette dernière solution qui est généralement préférée.

Comme frein de marche arrière, il a été proposé, notamment par le document FR-A-2 724 002, dans la mesure où les différents rapports de marche avant sont équipés de synchroniseurs, d'actionner préalablement à l'engagement du rapport de marche arrière un des synchroniseurs de marche avant pour effectuer le freinage de l'arbre primaire par rapport à l'arbre secondaire. Cependant, la cinématique de la boîte de vitesses décrite dans ce document n'est pas une cinématique du type décrit plus haut car, dans ce document, le passage de vitesse s'effectue en rotation tandis que la sélection de vitesse s'effectue en translation. Il s'ensuit que l'utilisation d'un synchroniseur décrit dans ce document n'est pas adaptable à une boîte de vitesses avec passage en translation et sélection en rotation, objet de la présente invention.

On connait par ailleurs des documents des documents FR2838176 et EP1508728 des dispositifs conforme au préambule de la revendication 1. Par ailleurs, le document US4601214 évoque, lors du passage de la marche arrière, des moyens d'actionnement du ou d'un synchroniseur de marche avant, lesdits moyens entraînant une translation du doigt de marche avant suffisante pour actionner le synchroniseur sans risque de passage du rapport de vitesse correspondant de marche avant.

La présente invention a pour but de concevoir un frein de marche arrière pour une boîte de vitesses du type effectuant le passage de vitesse en translation et la sélection de cette vitesse en rotation, un tel frein devant être simple et présenter un encombrement réduit.

L'invention concerne une boîte de vitesses de véhicule automobile, disposée entre un arbre primaire la reliant au moteur et un arbre secondaire la reliant aux roues motrices du véhicule, cette boîte comprenant au moins des premier et second rapports de vitesse de marche avant ainsi qu'un rapport de vitesse de marche arrière, le passage de rapport se faisant par l'intermédiaire d'un dispositif de commande à doigts de passage mobile en translation et la sélection de rapport par rotation de celui-ci, ce dispositif présentant un doigt de marche arrière et un doigt de marche avant, chacun agissant sur une fourchette respective, la boîte présentant au moins un synchroniseur de marche avant réduisant la vitesse de l'arbre primaire par rapport à l'arbre secondaire au début de la translation du doigt de marche avant pour la sélection d'un rapport, caractérisée en ce qu'elle comprend, lors du passage de la marche arrière, des moyens d'actionnement du ou d'un synchroniseur de marche avant, lesdits moyens entraînant une translation du doigt de marche avant suffisante pour actionner le synchroniseur sans risque de passage du rapport de vitesse correspondant de marche avant, lesdits moyen d'actionnements étant portés par la fourchette de rapport de marche avant respective, ces moyens présentant une partie rentrant en contact avec une partie correspondante du doigt de marche avant, au début du passage de la marche arrière, ce contact actionnant ledit synchroniser, ladite partie des moyens d'actionnement étant sous la forme d'un billage coopérant avec une rampe disposée sur le doigt de marche avant, ou inversement, la coopération de ce billage et de cette rampe permettant un déplacement suffisant de la fourchette associée pour l'actionnement dudit synchroniseur, ladite rampe présentant une partie avant d'inclinaison négative dans le sens trigonométrique par rapport à l'horizontale et une partie arrière d'inclinaison positive, l'angle de la partie avant étant plus élevé en valeur absolue que l'angle de la partie arrière, ladite partie arrière permettant une désactivation du synchroniseur en tant que frein de marche arrière.

Selon des caractéristiques additionnelles de l'invention :
- le synchroniseur de marche avant est le synchroniseur du premier rapport de vitesse de marche avant,
- le billage est rappelé en contact contre la rampe sous l'action d'un ressort,
- la partie inférieure du billage repose dans un évidement prévu à la partie supérieure de la fourchette faisant face au doigt de marche avant, ledit ressort étant intercalé entre la partie inférieure du billage et la base de l'évidement,
- la boîte de vitesses présente aussi une clé d'interverrouillage, bloquant les fourchettes des rapports de vitesse autres que celui à passer, cette clé présentant un moyen de blocage pénétrant dans un évidement aménagé sur la fourchette, l'évidement portant un moyen de création d'un jeu limité entre le moyen de blocage et la paroi de l'évidement, ce jeu étant suffisant pour actionner ledit synchroniseur sans permettre le passage de la vitesse de marche avant correspondante,
- l'évidement de la fourchette présente un embrèvement à l'extrémité supérieure d'une partie de son contour comme moyen de création dudit jeu.

L'invention concerne aussi un véhicule automobile, caractérisé en ce qu'il comprend une telle boîte de vitesses.

L'effet technique obtenu en utilisant un synchroniseur de marche avant comme frein de marche arrière est d'accroître fortement la décélération de l'arbre primaire et cela par ledit synchroniseur déjà présent dans la boîte de vitesses, l'actionnement de ce synchroniseur pour la marche arrière se faisant par un dispositif simple ne nécessitant pas d'adaptations spécifiques trop compliquées sur des éléments de la boîte.

La décélération obtenue est rapide. Le synchroniseur de marche avant dont la fonction est d'adapter la vitesse de l'arbre primaire à celle de l'arbre secondaire, amène l'arbre primaire plus rapidement à une vitesse nulle, étant donné que le véhicule est arrêté et que la vitesse de l'arbre secondaire est alors nulle.

L'invention va maintenant être décrite plus en détail mais de façon non limitative en regard des figures annexées, dans lesquelles :

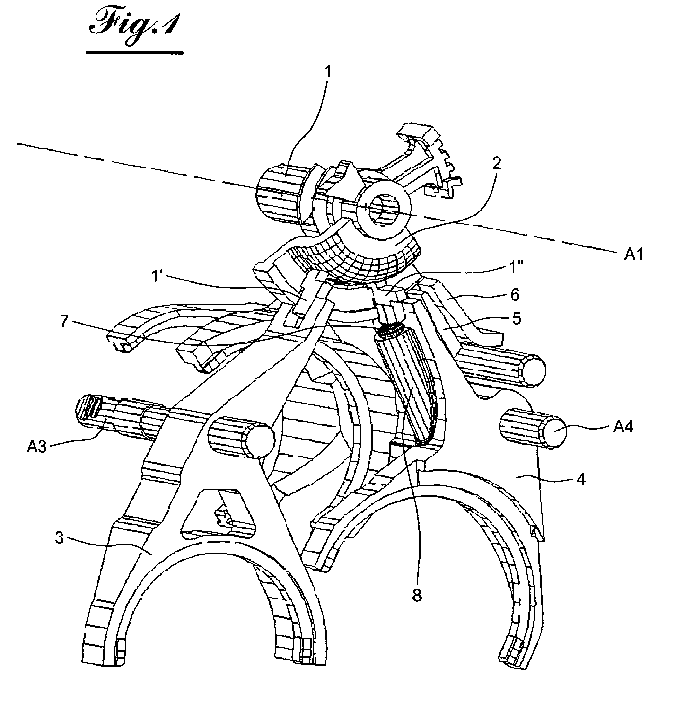

- la figure 1 est une représentation schématique d'une vue de trois quart avant en perspective d'un dispositif de commande de boîte de vitesses avec passage en translation et sélection en rotation pour des fourchettes respectives de rapport de vitesse, conformément à l'invention,

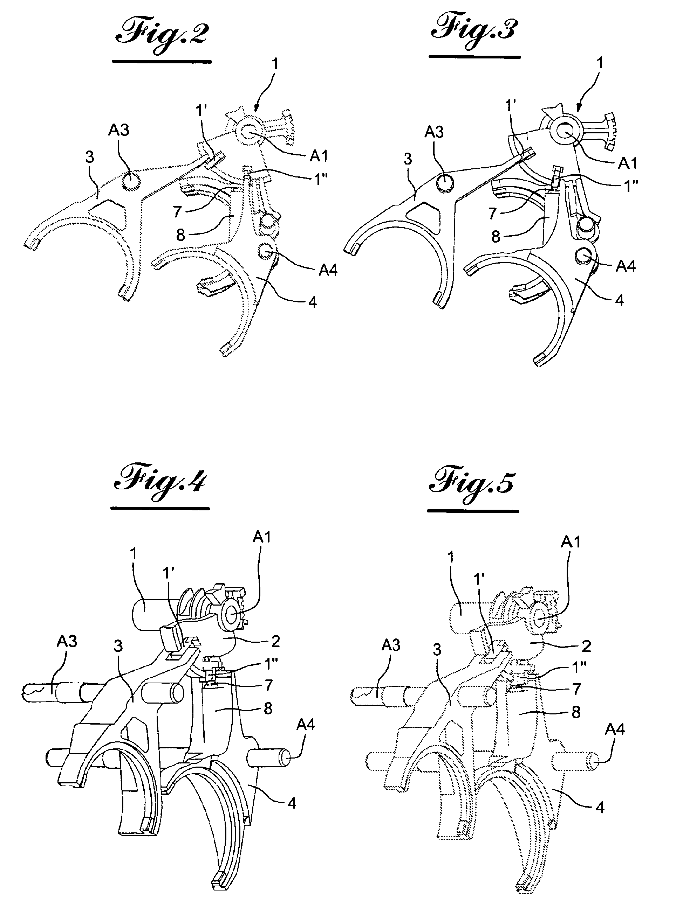

- la figure 2 est une représentation schématique d'une vue selon l'axe du dispositif de commande, d'un dispositif de commande de boîte de vitesses avec passage en translation et sélection en rotation, conformément à l'invention, en position de sélection de passage de rapport de vitesse 1^{ère}/2^{ème},

- la figure 3 est une représentation schématique d'une vue selon l'axe du dispositif de commande, d'un dispositif de commande de boîte de vitesses avec passage en translation et sélection en rotation, conformément à l'invention, en position de sélection de marche arrière, conformément à l'invention,
- la figure 4 est une représentation schématique d'une vue latérale en perspective d'un dispositif de commande de boîte de vitesses avec passage en translation et sélection en rotation pour des fourchettes de rapport de vitesse, conformément à l'invention, les moyens d'actionnement conjugués du synchroniseur portés par le doigt du dispositif du commande et la fourchette du premier rapport de vitesse de marche avant étant dans une première position, permettant l'actionnement de ce synchroniseur en tant que frein de marche arrière,
- la figure 5 est une représentation schématique d'une vue latérale en perspective d'un dispositif de commande de boîte de vitesses, avec passage en translation et sélection en rotation pour des fourchettes de rapport de vitesse, conformément à l'invention, les moyens d'actionnement conjugués du synchroniseur portés par le doigt du dispositif du commande et la fourchette du premier rapport de vitesse de marche avant étant dans une seconde position, permettant le relâchement du frein de marche arrière formé par ledit synchroniseur,

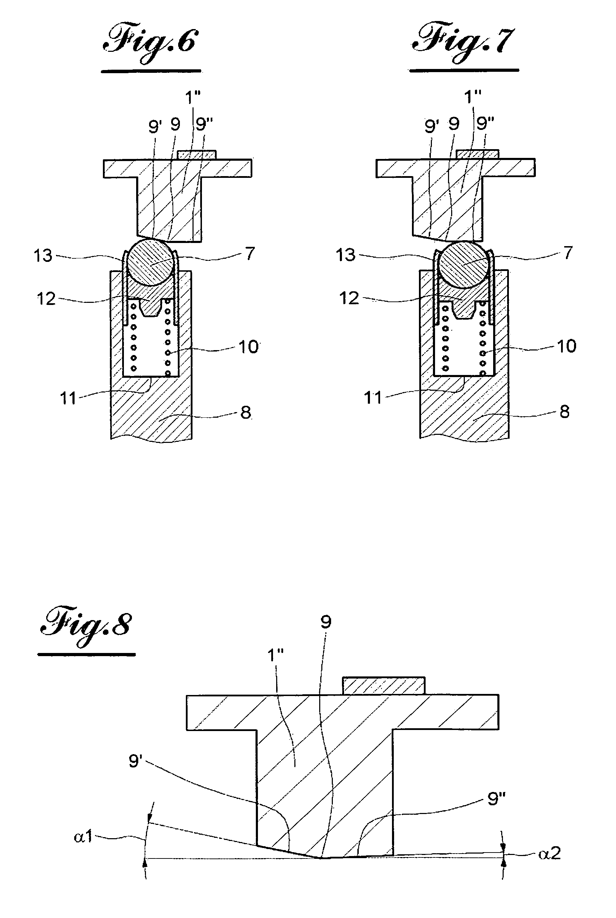

- la figure 6 est une vue agrandie d'une section longitudinale du doigt du dispositif de commande et de la fourchette du premier rapport de vitesse de marche avant, conformément à l'invention, les moyens d'actionnement conjugués du synchroniseur portés par le doigt du dispositif du commande et la fourchette étant dans la première position,
- la figure 7 est une vue agrandie d'une section longitudinale du doigt du dispositif de commande et de la fourchette du premier rapport de vitesse de marche avant, conformément à l'invention, les moyens d'actionnement conjugués du synchroniseur portés par le doigt du dispositif du commande et la fourchette étant dans la seconde position,
- la figure 8 est une vue agrandie des figures 6 et 7, montrant uniquement le doigt de marche avant avec une rampe à sa partie inférieure, conformément à la présente invention,

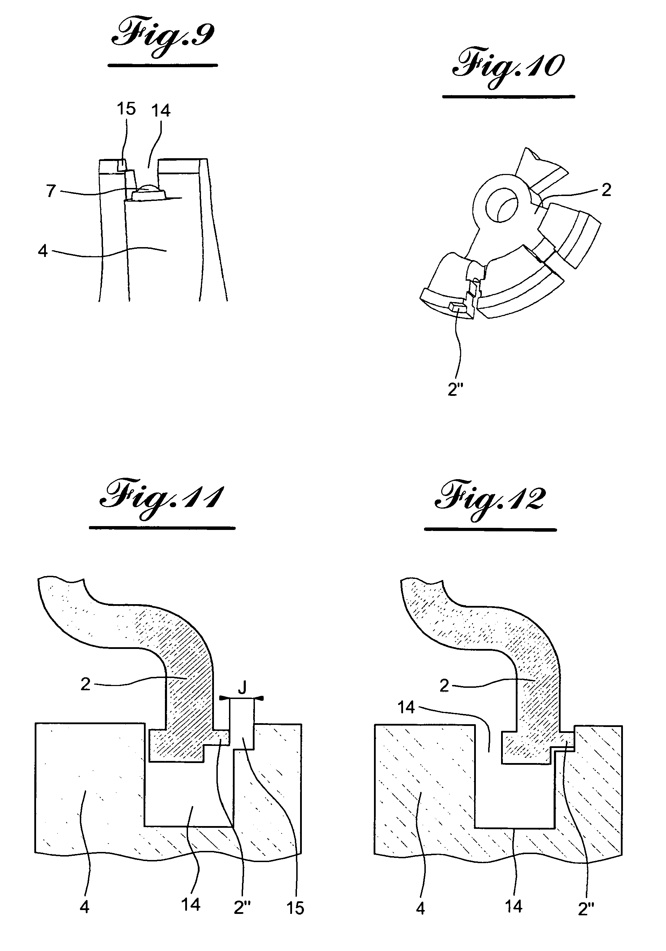

- la figure 9 est une vue de côté de l'extrémité de la fourchette du premier rapport de vitesse de marche avant, cette extrémité étant destinée à coopérer avec la clé d'interverrouillage et portant un moyen créant un jeu limité entre cette fourchette et la clé,
- la figure 10 est une vue en perspective d'une partie de la clé d'interverrouillage, cette partie portant le moyen de blocage en position de la fourchette de marche avant, lors du passage de la marche arrière, un jeu étant créé entre ce moyen de blocage et l'extrémité de la fourchette conformément à la présente invention,
- la figure 11 est une section longitudinale du moyen de blocage de la clé d'interverrouillage dans l'extrémité de la fourchette montrée à la figure 9, un jeu limité étant prévu entre ce moyen de blocage et la fourchette, le dispositif de commande, conformément à la présente invention, se trouvant à cette figure au point mort,
- la figure 12 est une section longitudinale du moyen de blocage de la clé d'interverrouillage dans l'extrémité de la fourchette montrée à la figure 9, un jeu limité étant prévu entre ce moyen de blocage et la fourchette, le dispositif de commande, conformément à la présente invention, se trouvant à cette figure en cours de sélection de rapport de marche arrière.

La figure 1 montre un dispositif 1 de commande de passage de vitesses dans une boîte de vitesse avec passage en translation et sélection en rotation, c'est-à-dire pour laquelle le passage du rapport de vitesse se fait par translation le long de l'axe A1 et la sélection du rapport par rotation autour de cet axe A1.

De manière connue, ce dispositif 1 de commande comprend une clé d'interverrouillage 2 tournante autour de l'axe A1 et portant au moins un moyen de blocage d'un autre rapport de vitesse que celui en train d'être sélectionné par rotation du dispositif de commande 1.

A cette figure, sont visibles notamment un doigt de marche arrière 1' et un doigt de marche avant 1", pour la sélection de rapports de marche avant.

Chacun de ces doigts 1' et 1" entraîne sélectivement une fourchette, le doigt de marche arrière 1' la fourchette de marche arrière 3 et le doigt de marche avant 1" la fourchette 4 de 1^{ère}/2^{ème}, ces deux fourchettes 3 et 4 pouvant translater suivant un axe respectif A3 et A4.

A cette figure, sont également visibles la fourchette 5 de 3^{ème}/4^{ème} et la fourchette 6 de 5^{ème}/6^{ème}.

De manière connue, au moins une fourchette d'un rapport de marche avant 4, de préférence toutes les fourchettes 4, 5 et 6, est munie d'un synchroniseur avant.

Un tel synchroniseur avant sert, après débrayage, à la synchronisation de la vitesse de l'arbre primaire de boîte de vitesses avec l'arbre secondaire de celle-ci.

L'idée à la base de l'invention consiste en une utilisation du synchroniseur d'un rapport de vitesse de marche avant pour une action de freinage lors du passage de la marche arrière, cela pour une boîte de vitesses avec une cinématique de passage en translation et sélection en rotation.

Conformément à la présente invention, la boîte de vitesses de véhicule automobile est disposée entre un arbre primaire la reliant au moteur et un arbre secondaire la reliant aux roues motrices du véhicule.

Cette boîte comprend au moins des premier et second rapports de vitesse de marche avant ainsi qu'un rapport de vitesse de marche arrière, le passage de rapport se faisant par l'intermédiaire d'un dispositif 1 de commande à doigts de passage mobile en translation et la sélection de rapport par rotation de ce dispositif 1, celui-ci présentant un doigt de passage de marche arrière 1' et un doigt de passe de marche avant 1" agissant sur une fourchette 3 ou 4 respective.

La boîte de vitesses présente au moins un synchroniseur de marche avant réduisant la vitesse de l'arbre primaire par rapport à l'arbre secondaire au début de la rotation du doigt de marche avant 1" pour la sélection d'un rapport.

La boîte de vitesses est caractérisée en ce qu'elle comprend, lors du passage du rapport de marche arrière, des moyens d'actionnement du ou d'un synchroniseur de marche avant, lesdits moyens entraînant une translation de la fourchette 4 de 1^{ère}/2^{ème} suffisante pour actionner le synchroniseur sans risque de passage du rapport de vitesse correspondant de marche avant.

Ces moyens d'actionnement peuvent être sous la forme de réalisation montrée à la figure 1.

A cette figure, la fourchette 4 de 1^{ère}/2^{ème} porte un élément 8 orienté vers le doigt de marche avant 1". Cet élément 8 porte, sur sa face la plus proche du doigt de marche avant 1" et orientée vers celui-ci, un billage 7 qui rentre en contact avec une rampe prévue à l'extrémité inférieure du doigt de marche avant 1" pour un actionnement de celui-ci.

C'est la solidarisation entre une fourchette d'un rapport de marche avant, à la figure 1 la fourchette 4 de 1^{ère}/2^{ème}, et le doigt de marche avant 1", cette solidarisation étant effectuée par les moyens d'actionnement présents sur la fourchette 4, c'est-à-dire l'élément 8 et son billage 7 avec ceux présents sur le doigt avant 1 ", c'est-à-dire la rampe à la partie inférieure du doigt avant 1" et qui sera mieux vue aux figures 6 et 7, qui provoque un mouvement de la fourchette 4 suffisant pour l'actionnement du synchroniseur de marche avant correspondant.

La figure 2 montre un dispositif de commande de boîte de vitesses avec passage en translation et sélection en rotation, conformément à l'invention, en position de sélection de passage de vitesse en 1^{ère}/2^{ème}, tandis que la figure 3 montre ce dispositif de commande en position de sélection de marche arrière.

A la figure 2, lors du passage d'un rapport de marche avant, les moyens d'actionnement, décrits plus haut, sont inopérants étant donné que l'actionnement du synchroniseur avant est effectué par le doigt de marche avant 1" et que celui-ci est déplacé en conséquence.

A la figure 3, de manière connue, lorsque le dispositif de commande est placé en sélection de rapport de marche arrière, le doigt de passage de marche arrière 1' se positionne en face de la fourchette de marche arrière 3 et le doigt de marche avant 1" se positionne à côté de la fourchette 4 de 1^{ère}/2^{ème}, de façon à ne pas entraîner la fourchette de 1^{ère}/2^{ème} lorsque la marche arrière est engagée.

Ceci est obtenu par la clé d'interverrouillage 2 qui empêche le mouvement de toutes les fourchettes non utilisées, par exemple des fourchettes de rapport de marche avant 4, 5 et 6 quand la fourchette de marche arrière 3 est utilisée.

Dans la forme de réalisation de la présente invention montrée à cette figure, le billage 7 sur l'élément 8 ajouté à la fourchette 4 de 1^{ère}/2^{ème} rentre en contact avec le doigt de marche avant 1" au début de la rotation du dispositif de commande 1 lors de la sélection de marche arrière.

Ceci provoque une solidarisation entre doigt avant 1" et fourchette 4 de 1^{ère}/2^{ème} qui va déplacer celle-ci. Ce déplacement de la fourchette 4 de 1^{ère}/2^{ème} doit être suffisant pour actionner le synchroniseur correspondant à cette fourchette sans bien sûr passer le rapport correspondant de marche avant. Ceci sera réglé par les dimensions respectives des moyens d'actionnement.

La figure 4 montre le dispositif de commande 1 et les fourchettes 3 et 4 de passage de vitesses au début de la sélection du rapport de marche arrière avec, simultanément, l'actionnement du synchroniseur de premier rapport de marche avant servant alors de frein de marche arrière.

A cette figure, le billage 7, porté par l'élément 8 de la fourchette 4, est en contact avec la section avant de la partie inférieure du doigt de marche avant 1", la forme de cette section avant étant choisie pour provoquer un déplacement de la fourchette 4 suffisant pour actionner le synchroniseur avant servant alors de frein de marche arrière, conformément à la présente invention.

La figure 5 montre ce dispositif de commande en fin de sélection de rapport de marche arrière avec le relâchement du frein de marche arrière.

A cette figure, le billage 7 porté par l'élément 8 de la fourchette 4 est en contact avec la section arrière de la partie inférieure du doigt de marche avant 1", la forme de cette section arrière étant choisie pour ne plus provoquer de déplacement de la fourchette 4, ce qui permet d'arrêter l'actionnement du synchroniseur et en conséquence d'effectuer le relâchement du frein de marche arrière, conformément à la présente invention.

Les figures 6 et 7 sont des vues agrandies des moyens d'actionnement présents respectivement sur la fourchette 4 et le doigt de marche avant 1", cela respectivement au début et à la fin de l'actionnement du synchroniseur en tant que frein de marche arrière, conformément à la présente invention.

A ces figures, comme déjà précédemment indiqué, l'élément 8 de la fourchette 4 porte un billage 7 faisant face à la partie inférieure du doigt de marche avant 1" .

Un évidement 11, central à l'élément 8, est aménagé sur une partie de la longueur de cet élément 8. Cet évidement 11 peut être avantageusement cylindrique, d'un diamètre légèrement supérieur à celui de la bille 7 pour recevoir la partie inférieure de celle-ci.

L'élément 8 présente un chemisage 13 dont la partie inférieure est introduite dans l'évidement 11 en étant appliquée au moins partiellement sur les contours de cet évidement 11. Ce chemisage 13 par sa partie supérieure faisant saillie de l'évidement 11 enveloppe partiellement la bille 7 en l'empêchant de se déplacer latéralement par rapport à l'évidement 11.

La partie inférieure de la bille 7 logée dans l'élément 8 est en repos sur un siège 12, lui-même rappelé par un ressort 10 tendant à pousser la bille 7 dans le sens d'une sortie de l'évidement 11, ce ressort 10 étant intercalé entre le siège 12 et la base de l'évidement 11.

Le doigt de marche avant 1" présente à sa partie inférieure faisant face à la bille 7 de l'élément 8 une rampe 9 avec une partie avant 9' active pendant l'actionnement du synchroniseur en tant que frein de marche arrière et une partie arrière 9", formant une contre rampe 9, active à la fin de l'engagement du rapport de marche arrière.

Comme il sera mieux vu à la figure 8 qui est une vue agrandie par rapport aux figures 6 et 7 du doigt de marche avant 1", conforme à la présente invention, la partie avant 9' de la rampe 9 présente un angle α1 par rapport à l'horizontale plus grand en valeur absolue que l'angle α2 de la partie arrière 9".

Le sens de l'inclinaison des deux parties est opposé de sorte que la partie arrière 9" de la rampe 9 agit comme une contre rampe par rapport à la partie avant 9' agissant comme une rampe. A la figure 8, l'angle 1 de la partie avant 9' est négatif dans le sens trigonométrique.

La cinématique de l'actionnement du synchroniseur associé à la fourchette 4 est la suivante.

La fourchette 4 de 1^{ère}/2^{ème} étant bloquée, le dispositif de commande 1 va continuer son mouvement, sous l'action du conducteur, en poussant la fourchette de marche arrière 3 par le biais du doigt de marche arrière 1'. Le contact de la partie avant 9' de la rampe 9 du doigt de marche avant 1" avec le billage 7 repousse celui-ci et la fourchette associée pour l'actionnement du synchroniseur.

Quand ce billage 7 arrive en contact avec la contre-rampe, formée par la partie arrière 9" de la rampe 9, la fourchette 4 associée revient au point mort ce qui permet d'éviter que le synchroniseur de 1^{ère}, en tant que frein de marche arrière, continue de frotter alors que la marche arrière est engagée.

Les figures 9 à 12 montrent le jeu entre le moyen de blocage porté par la clé d'interverrouillage et la fourchette dont le synchroniseur est utilisé en tant que frein de marche arrière.

Comme il a été déjà mentionné précédemment, le rôle d'une clé d'interverrouillage dans une boîte de vitesses avec passage en translation et sélection en rotation, est de bloquer en translation les fourchettes non sélectionnées.

Les figures 9 et 10 montrent respectivement l'extrémité supérieure de la fourchette 4 comportant un évidement 14 pour la réception du moyen de blocage porté par la clé d'interverrouillage et une partie de la clé d'interverrouillage 2 montrant le moyen de blocage 2" pénétrant dans cet évidement 14.

A la figure 9, l'évidement 14 de la fourchette 4 présente un embrèvement 15, tandis qu'à la figure 10, la clé d'interverrouillage porte un moyen de blocage 2", avantageusement sous la forme d'un doigt, coopérant avec cet évidement 14 pour réaliser le blocage de la fourchette 4 en position par la clé 2.

Comme il sera mieux vu aux figures 11 et 12 qui représentent des vues agrandies de la coopération entre l'évidement 14, prévu dans la fourchette 4, avec le moyen de blocage 2" de la clé d'interverrouillage 2, un jeu J est créé entre le moyen de blocage 2", avantageusement porté par une partie de la clé d'interverrouillage formant un bras et sous la forme d'un doigt, et l'évidement 14, cela à ces figures, respectivement pour des positions de boîte de vitesses au point mort et pendant l'action du frein de marche arrière.

Ce jeu J est dimensionné pour permettre un déplacement suffisant de la fourchette 4 par rapport à la clé d'interverrouillage 2 afin de faire frotter le synchroniseur de rapport de marche avant correspondant et donc de ralentir l'arbre primaire, ce jeu ne permettant pas une sélection intempestive du rapport de marche avant respectif.

Le synchroniseur de rapport de marche avant fait alors office de frein de marche arrière et permet d'annuler rapidement la vitesse de l'arbre primaire.

Une fois le jeu J dû à cet embrèvement 15 rattrapé, la fourchette 4 est de nouveau bloquée par la clé d'interverrouillage 2 et la sélection du rapport de marche avant ne peut pas se faire tant que le rapport de marche arrière est passé.

Il est à noter que plusieurs alternatives aux modes de réalisation précédemment mentionnés sont possibles.

Dans ce qui a été précédemment décrit, lors du passage de la marche arrière, le synchroniseur de rapport de 1^{ère} a été décrit. En effet, celui-ci est généralement très efficace et provoque un ralentissement de l'arbre primaire très rapide.

Il est néanmoins possible de choisir une autre fourchette de marche avant que la fourchette 1^{ère}/2^{ème}, cette autre fourchette étant associée avec un synchroniseur de rapport de marche avant respectif.

Par exemple, le synchroniseur du rapport le plus élevé peut aussi être choisi, celui-ci présentant l'inertie la plus faible.

Il est aussi possible d'inverser les moyens d'actionnement du synchroniseur, c'est-à-dire de faire porter le billage sur le doigt de marche avant tandis que la rampe est prévue sur la fourchette.

Les avantages de la présente invention sont nombreux. On pourra citer entre autres :
- une nouvelle utilisation en tant que frein de marche arrière d'un synchroniseur déjà prévu dans la boîte de vitesses pour la synchronisation en marche avant,
- l'économie d'un frein de marche arrière ou d'un synchroniseur arrière spécifique,
- pas du tout d'influence sur l'agrément en sélection, contrairement à d'autres systèmes de frein de marche arrière déjà existants.

L'invention n'est nullement limitée aux modes de réalisation décrits et illustrés qui n'ont été donnés qu'à titre d'exemples.

## Revendications

1. Boîte de vitesses de véhicule automobile, disposée entre un arbre primaire la reliant au moteur et un arbre secondaire la reliant aux roues motrices du véhicule, cette boîte comprenant au moins des premier et second rapports de vitesse de marche avant ainsi qu'un rapport de vitesse de marche arrière, le passage de rapport se faisant par l'intermédiaire d'un dispositif de commande (1) à doigts de passage mobile en translation et la sélection de rapport par rotation de celui-ci, ce dispositif (1) présentant un doigt de marche arrière (1') et un doigt de marche avant (1"), chacun agissant sur une fourchette (3 ou 4) respective, la boîte présentant au moins un synchroniseur de marche avant réduisant la vitesse de l'arbre primaire par rapport à l'arbre secondaire au début de la translation du doigt de marche avant (1") pour la sélection d'un rapport, **caractérisée en ce qu'**elle comprend, lors du passage de la marche arrière, des moyens d'actionnement (7, 8, 9) du ou d'un synchroniseur de marche avant, lesdits moyens (7, 8, 9) entraînant une translation de la fourchette (4) suffisante pour actionner le synchroniseur sans risque de passage du rapport de vitesse correspondant de marche avant, lesdits moyens étant portés par la fourchette de rapport de marche avant (4) respective, ces moyens (7, 8, 9) présentant une partie (7) rentrant en contact avec une partie (9) correspondante du doigt de marche avant (1" ), au début du passage de la marche arrière, ce contact actionnant ledit synchroniseur, ladite partie des moyens d'actionnement (7, 8, 9) étant sous la forme d'un billage (7) coopérant avec une rampe (9) disposée sur le doigt de marche avant (1"), ou inversement, la coopération de ce billage (7) et de cette rampe (9) permettant un déplacement suffisant de la fourchette (4) associée pour l'actionnement dudit synchroniseur, ladite rampe (9) présentant une partie avant (9') d'inclinaison négative dans le sens trigonométrique par rapport à l'horizontale et une partie arrière (9") d'inclinaison positive, l'angle (α1) de la partie avant étant plus élevé en valeur absolue que l'angle (α2) de la partie arrière, ladite partie arrière permettant une désactivation du synchroniseur en tant que frein de marche arrière.

2. Boîte de vitesses selon la revendication 1, **caractérisée en ce que** le synchroniseur de marche avant est le synchroniseur du premier rapport de vitesse de marche avant.

3. Boîte de vitesses selon la revendication précédente, **caractérisée en ce que** le billage (7) est rappelé en contact contre la rampe (9) sous l'action d'un ressort (10) .

4. Boîte de vitesses selon la revendication précédente, **caractérisée en ce que** la partie inférieure du billage (7) repose dans un évidement (11) prévu à la partie supérieure de la fourchette (4) faisant face au doigt de marche avant (1"), ledit ressort (10) étant intercalé entre la partie inférieure du billage (7) et la base de l'évidement (11).

5. Boîte de vitesses selon l'une quelconque des revendications précédentes, **caractérisée en ce qu'**elle présente aussi une clé d'interverrouillage (2), bloquant les fourchettes (3 à 6) des rapports de vitesse autres que celui à passer, cette clé (2) présentant un moyen de blocage (2") pénétrant dans un évidement (14) aménagé sur la fourchette (4), l'évidement (14) portant un moyen de création (15) d'un jeu (J) limité entre le moyen de blocage (2") et la paroi de l'évidement (14), ce jeu (J) étant suffisant pour actionner ledit synchroniseur sans permettre le passage de la vitesse de marche avant correspondante.

6. Boîte de vitesses selon la revendication précédente, **caractérisée en ce que** l'évidement (14) de la fourchette (4) présente un embrèvement (15) à l'extrémité supérieure d'une partie de son contour, comme moyen de création dudit jeu.

7. Véhicule automobile, **caractérisé en ce qu'**il comprend une boîte de vitesses selon l'une quelconque des revendications précédentes.

## Claims

1. A gearbox of a motor vehicle, arranged between a primary shaft connecting it to the engine and a secondary shaft connecting it to the driving wheels of the vehicle, this box comprising at least first and second forward running gear ratios and also a reverse gear ratio, the gear ratio shift being made by means of a control device (1) with shift fingers movable in translation and the selection of the ratio by rotation thereof, this device (1) having a reverse running finger (1') and a forward running finger (1"), each acting on a respective fork (3 or 4), the box having at least one forward running synchronizer, reducing the speed of the primary shaft with respect to the secondary shaft at the start of the translation of the forward running finger (1") for the selection of a ratio, **characterized in that** it comprises, on shifting of the reverse gear, actuating means (7,8, 9) of the, or of one, forward running synchronizer, the said means (7, 8, 9) bringing about a translation of the fork (4) which is sufficient to actuate the synchronizer without the risk of shifting of the corresponding forward running gear ratio, the said means being carried by the respective forward running gear ratio fork (4), these means (7, 8, 9) having a part (7) re-entering in contact with a corresponding part (9) of the forward running finger (1") at the start of the shift of the reverse running, this contact actuating the said synchronizer, the said part of the actuating means (7, 8, 9) being in the form of a detent ball arrangement (7) cooperating with a ramp (9) arranged on the forward running finger (1"), or vice versa, the cooperation of this detent ball arrangement (7) and of this ramp (9) permitting a sufficient displacement of the associated fork (4) for the actuation of the said synchronizer, the said ramp (9) having a front part (9') of negative inclination in the trigonometric direction with respect to the horizontal and a rear part (9") of positive inclination, the angle (α1) of the front part being higher in absolute value than the angle (α2) of the rear part, the said rear part permitting a deactivation of the synchronizer as reverse running brake.

2. The gearbox according to Claim 1, **characterized in that** the forward running synchronizer is the synchronizer of the first forward running gear ratio.

3. The gearbox according to the preceding claim, **characterized in that** the detent ball arrangement (7) is brought back in contact against the ramp (9) under the action of a spring (10).

4. The gearbox according to the preceding claim, **characterized in that** the lower part of the detent ball arrangement (7) rests in a recess (11) provided on the upper part of the fork (4) facing the forward running finger (1"), the said spring (10) being inserted between the lower part of the detent ball arrangement (7) and the base of the recess (11).

5. The gearbox according to any one of the preceding claims, **characterized in that** it also has an interlocking key (2), locking the forks (3 to 6) of the gear ratios other than that which is to be shifted, this key (2) having a locking means (2") penetrating in a recess (14) arranged on the fork (4), the recess (14) having a means (15) for creating a limited play (J) between the locking means (2") and the wall of the recess (14), this play (J) being sufficient to actuate the said synchronizer without permitting the corresponding forward running gear shift.

6. The gearbox according to the preceding claim, **characterized in that** the recess (14) of the fork (4) has a dimple (15) at the upper end of a portion of its contour, as a means for creating the said play.

7. A motor vehicle, **characterized in that** it comprises a gearbox according to any one of the preceding claims.

## Patentansprüche

1. Schaltgetriebe für Kraftfahrzeug, angeordnet zwischen einer Hauptwelle, die es mit dem Motor verbindet, und einer Nebenwelle, die es mit den Antriebsrädern des Fahrzeugs verbindet, wobei dieses Getriebe mindestens einen ersten und einen zweiten Vorwärtsgang sowie einen Rückwärtsgang aufweist, wobei das Gangeinlegen über eine Fingerschaltvorrichtung (1) zum beweglichen Einlegen in Verschiebung und die Gangauswahl durch Drehen dieser erfolgt, wobei diese Vorrichtung (1) einen Rückwärtsgangfinger (1') und einen Vorwärtsgangfinger (1") aufweist, wobei jeder auf eine jeweilige Gabel (3 oder 4) einwirkt, wobei das Schaltgetriebe mindestens eine Vorwärtsgang-Synchronisierungseinrichtung aufweist, die die Drehzahl der Hauptwelle in Bezug zu der Nebenwelle zu Beginn der Verschiebung des Vorwärtsgangfingers (1") zur Auswahl eines Gangs verringert, **dadurch gekennzeichnet, dass** es beim Einlegen des Rückwärtsgangs Mittel (7, 8, 9) zum Betätigen der oder einer der anderen Vorwärtsgang-Synchronisierungseinrichtungen aufweist, wobei die Mittel (7, 8, 9) eine Verschiebung der Gabel (4) bewirken, die ausreicht, um die Synchronisierungseinrichtung ohne Gefahr des Einlegens des dem Vorwärtsgang entsprechenden Gangs zu betätigen, wobei die Mittel von der jeweiligen Vorwärtsganggabel (4) getragen werden, wobei diese Mittel (7, 8, 9) einen Teil (7) aufweisen, der mit einem entsprechenden Teil (9) des Vorwärtsgangfingers (1") zu Beginn des Einlegens des Rückwärtsgangs in Berührung tritt, wobei dieser Kontakt die Sychronisierungseinrichtung betätigt, wobei der Teil der Betätigungsmittel (7, 8, 9) die Form einer Lagerung (7) hat, mit einer Rampe (9) zusammenwirkt, die auf dem Vorwärtsgangfinger (1") angeordnet ist oder umgekehrt, das Zusammenwirken dieser Lagerung (7) und dieser Rampe (9) eine ausreichende Verlagerung der dazugehörenden Gabel (4) erlaubt, um die Synchronisierungseinrichtung zu betätigen, wobei die Rampe (9) einen vorderen Teil (9') mit negativer Neigung in trigonometrische Richtung in Bezug zur Senkrechten aufweist, und einen hinteren Teil (9") mit positiver Neigung, wobei der Winkel (α1) des vorderen Teils im Absolutwert größer ist als der Winkel (α2) des hinteren Teils, wobei der hintere Teil ein Deaktivieren der Synchronisierungseinrichtung als Rückwärtsgangbremse erlaubt.

2. Schaltgetriebe nach Anspruch 1, **dadurch gekennzeichnet, dass** die Vorwärtsgang-Synchronisierungseinrichtung die Synchronisierungseinrichtung des ersten Vorwärtsgangs ist.

3. Schaltgetriebe nach dem vorhergehenden Anspruch, **dadurch gekennzeichnet, dass** die Lagerung (7) in Berührung gegen die Rampe (9) unter der Einwirkung einer Feder (10) zurückgeholt wird.

4. Schaltgetriebe nach dem vorhergehenden Anspruch, **dadurch gekennzeichnet, dass** der untere Teil der Lagerung (7) in einer Vertiefung (11) ruht, die an dem oberen Teil der Gabel (4), der dem Vorwärtsgangfinger (1") gegenüberliegt, vorgesehen ist, wobei die Feder (10) zwischen dem unteren Teil der Lagerung (7) und der Basis der Vertiefung (11) eingefügt ist.

5. Schaltgetriebe nach einem der vorhergehenden Ansprüche, **dadurch gekennzeichnet, dass** es auch einen Schlüssel (2) zum gegenseitigen Verriegeln aufweist, der die Gabeln (3 bis 6) der anderen Gänge als dem einzulegenden blockiert, wobei dieser Schlüssel (2) ein Blockierungsmittel (2") aufweist, das in eine Vertiefung (14) eindringt, die auf der Gabel (4) eingerichtet ist, wobei die Vertiefung (14) ein Mittel zum Schaffen (15) eines eingeschränkten Spiels (J) zwischen dem Blockierungsmittel (2") und der Wand der Vertiefung (14) trägt, wobei dieses Spiel (J) ausreicht, um die Synchronisierungseinrichtung zu betätigen, ohne das Einlegen des entsprechenden Vorwärtsgangs zu erlauben.

6. Schaltgetriebe nach dem vorhergehenden Anspruch, **dadurch gekennzeichnet, dass** die Vertiefung (14) der Gabel (4) eine Zinkung (15) an dem oberen Ende eines Teils ihrer Kontur als Mittel zum Schaffen des Spiels aufweist.

7. Kraftfahrzeug, **dadurch gekennzeichnet, dass** es ein Schaltgetriebe nach einem der vorhergehenden Ansprüche aufweist.
